(19) Europäisches Patentamt
European Patent Office
Office européen des brevets

(11) Veröffentlichungsnummer : **0 392 148 B1**

(12) **EUROPÄISCHE PATENTSCHRIFT**

(45) Veröffentlichungstag der Patentschrift :
**28.10.92 Patentblatt 92/44**

(51) Int. Cl.$^5$ : **F16L 27/04**, F16L 21/00, F16L 21/02

(21) Anmeldenummer : **90102452.1**

(22) Anmeldetag : **08.02.90**

(54) **Rohrverbindung.**

(30) Priorität : **11.04.89 DE 8904526 U**

(43) Veröffentlichungstag der Anmeldung :
**17.10.90 Patentblatt 90/42**

(45) Bekanntmachung des Hinweises auf die
Patenterteilung :
**28.10.92 Patentblatt 92/44**

(84) Benannte Vertragsstaaten :
**AT DE DK FR GB NL SE**

(56) Entgegenhaltungen :
EP-A- 0 043 304
AT-B- 178 506
DE-A- 2 104 702

(56) Entgegenhaltungen :
DE-C- 453 910
FR-A- 2 206 828
US-A- 2 323 823
US-A- 3 656 771
US-A- 4 465 309

(73) Patentinhaber : **Vahlbrauk, Karl Heinz
Kriegerweg 1
W-3353 Bad Gandersheim (DE)**

(72) Erfinder : **Vahlbrauk, Karl Heinz
Kriegerweg 1
W-3353 Bad Gandersheim (DE)**

(74) Vertreter : **Sobisch, Peter, Dipl.-Ing. et al
Patentanwälte Dipl.-Inge. Röse, Kosel &
Sobisch Odastrasse 4a Postfach 129
W-3353 Bad Gandersheim 1 (DE)**

**Beschreibung**

Die Erfindung bezieht sich auf eine Rohrverbindung entsprechend dem Oberbegriff des Anspruchs 1.

Rohrverbindungen sind in mannigfacher Form bekannt und weisen eine, den Betriebsbedingungen der Rohrleitungen entsprechende Gestaltung auf. Sie unterscheiden sich ferner unter anderem durch den jeweiligen Herstellungs- und Montageaufwand sowie die Komplexität insbesondere der bauseitigen Handhabbarkeit. Die Herstellung einer Rohrverbindung beispielsweise durch Verschraubung gestaltet sich als vergleichsweise aufwendig und erfordert darüber hinaus die Bereitstellung von Rohren, deren Wanddicke unter Berücksichtigung des anzubringenden Gewindes dicker ausfallen muß als dies von den Betriebsbedingungen der Rohrleitung her erforderlich ist. Dieser Gesichtspunkt gilt sowohl für Stahl- als auch Kunststoffrohre. Im Falle einer Verschraubung wird somit die erforderliche Wanddicke im Regelfall durch das Gewinde bestimmt. Wird hingegen die Rohrverbindung durch Verschweißung zweier Rohrenden hergestellt, können bei sonst unveränderten Bedingungen vergleichsweise dünnwandigere Rohre eingesetzt werden. Die Herstellung von Schweißverbindungen gestaltet sich jedoch ebenfalls vergleichsweise arbeitsaufwendig.

Darüber hinaus sind Steckverbindungen von Rohrleitungen in unterschiedlichsten Ausführungsformen bekannt. So zeigt beispielsweise die DE-C-453 910 eine Rohrverbindung, bei der die zu verbindenden Rohrenden in gleicher Weise muffenartig aufgeweitet sind und über eine besondere Kupplungseinrichtung zusammengehalten werden. Die Kupplungseinrichtung besteht aus einem außenseitig im wesentlichen an die innenseitige Gestaltung der Aufweitungen angepaßten Kernrohr und einer beide muffenartige Aufweitungen außenseitig umgreifenden, längsgeteilt ausgebildeten und schraubenbetätigten Rohrschelle. Die Rohrschelle ist innenseitig an die Außenseite der muffen artigen Aufweitung angepaßt und es befinden sich an den stirnseitigen Endabschnitten des Kernrohres ringartige Dichtungselemente, die mit der Innenseite der genannten Aufweitungen dichtend zusammenwirken. Die radialen Innenabmessungen des Kernrohres entsprechen denjenigen der Rohrenden in ihren unaufgeweiteten Abschnitten. Die genannten ringartigen Dichtelemente werden durch in eine außenseitige Rinne des Kernrohres eingelegte Ringe oder Packungen gebildet. Über die genannte Rohrschelle wird aufgrund des formschlüssigen Umgreifens der Aufweitungen eine axiale Auszugssicherung gebildet, wobei ein Anspannen der Rohrschelle aufgrund der hiermit verbundenen Durchmesserverringerung gleichzeitig eine Druckwirkung im Bereich der Dichtelemente zur Folge hat. Aufgrund der vergleichsweise starren Führung der Dichtelemente ist bei der Montage dieser bekannten Rohrverbindung insbesondere bei größeren Nenndurchmessern jedoch mit einem erheblichen Kraftaufwand zu rechnen. Darüber hinaus basiert der axiale Zusammenhalt dieser bekannten Rohrverbindung ausschließlich auf der Wirkung der äußeren Rohrschelle.

Es ist die Aufgabe der Erfindung, eine steckbare Rohrverbindung der eingangs bezeichneten Gattung zu entwerfen, die sich auch bei größeren Rohrdurchmessern durch eine leichte Handhabbarkeit, insbesondere Montierbarkeit auszeichnet und eine hinreichende Festigkeit aufweist, und zwar sowohl gegenüber radialer als auch axialer Beaufschlagung. Gelöst ist diese Aufgabe bei einer gattungsgemäßen Rohrverbindung durch die Merkmale des Kennzeichnungsteils des Anspruchs 1.

Es wird erfindungsgemäß von untereinander gleichartigen, mit muffenartigen Aufweitungen versehenen Rohrenden ausgegangen, die über ein besonderes einteiliges Kupplungsstück miteinander formschlüssig und dichtend in Verbindung stehen. Das Kupplungsstück besteht im wesentlichen aus einem zum Einstecken in beide muffenartige Aufweitungen bestimmten Kernrohr, welches außenseitig besondere Dichtelemente aufweist, welche erfindungsgemäß jedoch nicht nur eine Dichtungsfunktion übernehmen, sondern auch der formschlüssigen Befestigung der Rohrenden aneinander dienen, somit der Rohrverbindung die notwendige Festigkeit gegenüber einer axialen Beaufschlagung geben. Es sind die genannten Dichtelemente zu diesem Zweck mit Auswölbungen versehen, die zum elastischen Eingreifen die genannten ausgewölbten Abschnitte der einander gegenüberstehenden Rohrenden bestimmt sind. Die Abschnitte sind zu diesem Zweck derart ausgebildet, daß sie sich von ihren radialen Abmessungen her in Richtung auf das stirnseitige Ende des jeweiligen Rohrendes hin verjüngen. Der im Rahmen der Dichtelemente eingesetzte Werkstoff ist entsprechend den Betriebsbedingungen der Rohrleitung gewählt, wobei über die werkstoffliche Seite in Verbindung mit der Bemessung der Dichtelemente, jedoch auch des Kernrohres die radiale Elastizität des Kupplungsstückes in einem gewissen Rahmen steuerbar ist, so daß auch bei vergleichsweise größeren Nennweiten der Rohrleitung die Steckverbindung mit vergleichsweise geringem Kraftaufwand herstellbar ist. Die genaue Gestaltung des ausgewölbten Abschnitts der Rohrenden ist grundsätzlich beliebig, soweit die Bedingung erfüllt ist, daß sich der Abschnitt in Richtung auf das stirnseitige Ende des jeweiligen Rohrendes hin verjüngt, so daß in Verbindung mit einer zu diesem Abschnitt entsprechenden Auswölbung des Dichtelements ein Formschluß herstellbar ist. Beispielsweise kann der ausgewölbte Abschnitt ein tulpenförmiges Profil haben. Es ist jedoch auch denkbar, daß es sich hierbei um einen zylindrischen Abschnitt handelt, der endseitige radiale oder auch konische Einziehungen aufweist. Die genannten, in den Auswölbungen der Dichtelemente angeordneten Aufnahmetaschen stellen eine gewisse radiale Elastizität der Dichtelemente her, die im übrigen gestaltlich weitestgehend der Innenkontur der ausgewölbten Abschnitte der Aufweitungen der Rohrenden nachgebildet sind. Die genannten Aufnahmetaschen können sehr vorteilhaft als Aufnahmeräume für Füllmassen benutzt werden, die während der Montage in diese eingebracht werden und der Stabilisierung, insbesondere der Festigkeitserhöhung der Rohrverbindung dienen. Je nach der Art der hierbei eingesetzten Füllmasse ergeben sich unterschiedliche Eigenschaften der Rohrverbindung, worauf im folgenden noch näher eingegangen werden wird. Es ist das Kupplungsstück grundsätzlich symmetrisch bezüglich einer radialen Mittelebene ausgebildet, d.h. an beiden Endbereichen des Kernrohres befinden sich gleichartige Dichtelemente, die zweckmäßigerweise mit Abstand vor der genannten Mittelebene enden. Der beide ausgewölbte Abschnitte der muffenartigen Aufweitungen der Rohrenden übergreifende und formschlüssig sichernde Spannkörper der Rohrschelle gewährleistet eine besonders betriebssichere Gestaltung, welche auch bauseitig leicht handhabbar ist. Wesentlich ist hierbei, daß der Spannkörper in seinem Innenprofil zumindest an seinen stirnseitigen Endbereichen an das Profil der ausgewölbten Abschnitte angepaßt ist, so daß auf diese - und zwar über eine vergleichsweise große Fläche verteilt - ein gleichmäßiger Druck ausgeübt wird.

Der durch den Spannkörper außenseitig abgeschlossene Ringraum entsprechend den Merkmalen des Anspruchs 2 dient als Aufnahmeraum für das, als Folge des Einschiebens des Kupplungsstücks in die muffenartigen Aufweitungen aus den Aufnahmetaschen verdrängte Volumen an Füllmasse. Diese verteilt sich gleichmäßig in dem genannten Ringraum, so daß durch Spannen der Rohrschelle eine gleichmäßige hydraulisch bedingte Druckausübung auf die Außenseiten der muffenartigen Aufweitungen innerhalb des Ringraumes gegeben ist. Auf diese Weise wird zu einer zuverlässigen Dichtung und gleichzeitig einer hohen Festigkeit der Rohrverbindung beigetragen.

Die Merkmale des Anspruchs 3 dienen einer anderen Form der Erhöhung der Dichtwirkung der erfindungsgemäßen Rohrverbindung, welche unter bestimmten Betriebsbedingungen zweckmäßig ist. Dies ist beispielsweise dann der Fall, wenn eine erhöhte Korrosionsbeständigkeit gegenüber bestimmten, im Erdreich anstehenden Einflüssen gefordert ist, deren Eindringen in die Rohrverbindung in jedem Fall verhindert werden muß. Genannt seien beispielsweise erdverlegte Heizölleitungen oder druckbeaufschlagte Schmutzwasserleitungen, jedoch auch Druckluftleitungen in aggressiver Raumluft, Kühlwasserleitungen oder Feuerlöschleitungen. In diesen Fällen werden an das, gegenüber dem geforderten Medium wirksame Dichtmittel andere werkstoffliche Anforderungen gestellt, als an das, gegenüber der Umgebung wirkende Dichtmittel. Der somit auf der Innenseite des Spannkörpers angebrachte, eine zusätzliche Dichtungsfunktion übernehmende Vorsprung ist zweckmäßigerweise an der Innenseite des Spannkörpers angeklebt.

Die Merkmale des Anspruchs 5 dienen der Einstellung eines möglichst glatten Innenwandungsverlaufs im Bereich der Rohrverbindung. Das innerhalb dieser Rohrleitung strömende Medium erfährt im Bereich der Rohrverbindung keinerlei Verwirbelung, so daß sich auch keinerlei Strömungsgeräusche ergeben. Darüber hinaus werden in diesem Bereich auch solche Räume vermieden, die zu Ablagerungserscheinungen führen, so daß die erfindungsgemäße Rohrverbindung insbesondere auch unter hygienischen Gesichtspunkten unbedenklich im Rahmen von Trinkwasserleitungen nutzbar ist.

Die Merkmale der Ansprüche 6 und 7 betreffen die nähere Ausgestaltung bzw. die Zweckbestimmung der Aufnahmetaschen. Die in diese einzubringende Füllmasse ist ein mit dem Werkstoff der Dichtelemente verbindbarer bzw. verklebbarer Kunststoff, wobei über die Wahl dieses Kunststoffs konstruktiv festgelegt ist, ob die sich ergebende Rohrverbindung lösbar, bedingt lösbar oder unlösbar ausgestaltet ist. Wird beispielsweise ein duroplastischer Kunststoff in diese Aufnahmetaschen eingebracht, kann die Rohrverbindung als unlösbar angesehen werden, da der ausgehärtete Kunststoff aufgrund des formschlüssigen Eingriffs zwischen den Auswölbungen des Dichtelements und den entsprechenden Abschnitten der Rohrenden ein Auseinanderziehen verhindert. Bei Verwendung eines thermoplastischen Kunststoffs hingegen kann durch Einbringung von Wärme die Verbindung gelöst werden. Ein Lösen ist ebenfalls dann möglich, wenn der Kunststoff vergleichsweise weich ist, daß der Formschluß unter entsprechender elastischer Verformung des Dichtelements lösbar ist.

Die Merkmale des Anspruchs 8 gewährleisten, daß sich bei Verwendung metallischer Werkstoffe innerhalb der erfindungsgemäßen Rohrverbindung keinerlei elektrochemisch bedingte Korrosionsprobleme ergeben. Zur Erhöhung der radialen Elastizität kann das Kernrohr sehr vorteilhaft mit einem axial durchlaufenden Schlitz versehen werden.

Die Merkmale des Anspruch 9 haben sich als besonders praktisch erwiesen, da sie eine einfache Herstellbarkeit des Kupplungsstücks ermöglichen. Die Dichtelemente bestehen hiernach Vorzugweise aus einem gummielastischen Werkstoff.

Das Kernrohr und die beiden Rohrenden können auch aus einem geeigneten Kunststoff bestehen. Auch in diesem Fall kann die Rohrverbindung grundsätzlich wie oben beschrieben ausgebildet werden. Die Grundgedanken der erfindungsgemäßen Rohrverbindung können auch dann angewandt werden, wenn ein Rohrende lediglich zylindrisch ausgebildet ist. In diesem Fall muß auf dieses ein Dichtelement aufgebracht werden, dessen Außenprofil dem obenbeschriebenen Dichtelement entspricht, welches mit einer entsprechenden ringartigen Aufnahmetasche versehen ist, die erfindungsgemäß in Gegenrichtung zur Einsteckrichtung offen ist und der Aufnahme einer Füllmasse dient, die während des Einsteckens teilweise verdrängt wird.

Die Erfindung wird im folgenden unter Bezugnahme auf das in den Zeichnungen dargestellte Ausführungsbeispiel näher erläutert werden. Es zeigen:

Fig. 1 einen Längsschnitt der erfindungsgemäßen Rohrverbindung vor dem Zusammenbau;

Fig. 2 einen Längsschnitt einer montierten erfindungsgemäßen Rohrverbindung.

Mit 1, 2 sind in den Zeichnungen zwei zu verbindende bzw. verbundene Rohrenden bezeichnet, deren beide Endbereiche jeweils in gleicher Weise muffenartig aufgeweitet sind. Es handelt sich bei dem gezeigten Ausführungsbeispiel jeweils um aus Stahl bestehende Rohrenden.

Jede der genannten muffenartigen Aufweitungen besteht aus einem ersten, im wesentlichen zylindrischen Abschnitt 3, an den sich - in Richtung auf das stirnseitige Ende der Rohrenden hin - ein im Längsschnitt tulpenartiger Abschnitt 4 anschließt. Der größte Teil des letztgenannten Abschnitts 4 ist durchmessermäßig gegenüber dem zylindrischen Abschnitt 3 zwar erweitert, in Richtung auf sein stirnseitiges freies Ende hin jedoch bis auf einen, im wesentlichen dem Durchmesser des zylindrischen Abschnitts 3 entsprechenden Durchmesser verjüngt.

Zur dichtenden und zuverlässigen Verbindung der somit untereinander gleichartigen Rohrenden 1, 2 dient ein global mit der Bezugsziffer 5 bezeichnetes Kupplungsstück. Letzteres besteht aus einem metallischen, zylindrisch gestalteten Kernrohr 6, welches gleichzeitig einen Teil der Innenwandung des Kupplungsstücks 5 bildet. Das Kernrohr 6 trägt an beiden Endbereichen jeweils ein, diese außenseitig umgebendes ringartiges Dichtelement 7, welches aus einem elastischen, beispielsweise gummiartigen Werkstoff bestehen kann.

Das Dichtelement 7 überragt mit seinem einen Endabschnitt 8 das diesem zugekehrte stirnseitige Ende des Kernrohres 6 und es ist das Kernrohr in die Substanz des Dichtelements 7 derart eingebunden, daß die Innenwandung des Endabschnitts 8 fluchtend zur Innenwandung des Kernrohres 6 verläuft. Das Dichtelement 7 weist auf seinem, dem Endabschnitt 8 abgekehrten Ende seinerseits außenseitig eine tulpenartige Aufweitung 9 auf, die an ihrem stirnseitigen Ende eine ringartige, radial durch die Außenseite des Kernrohres sowie die Innenseite des Dichtelements umgrenzte Aufnahmetasche 10 bildet. Diese Aufnahmetasche 10 ist an ihrem stirnseitigen Ende offen. Es ist das Dichtelement 7 in einem mittleren Ab

schnitt 11 an die Außenseite des Kernrohres 6 geklebt bzw. anvulkanisiert. Wesentlich ist, daß die gesamte Innenwandung des Kupplungsstücks 5 eine im wesentlichen einheitliche, d.h. von Stoßstellen freie Fläche bildet.

Das Kernrohr 6 ist vorzugsweise mit einem zeichnerisch nicht dargestellten Längsschlitz versehen, der diesem eine gewisse radiale Elastizität verleiht.

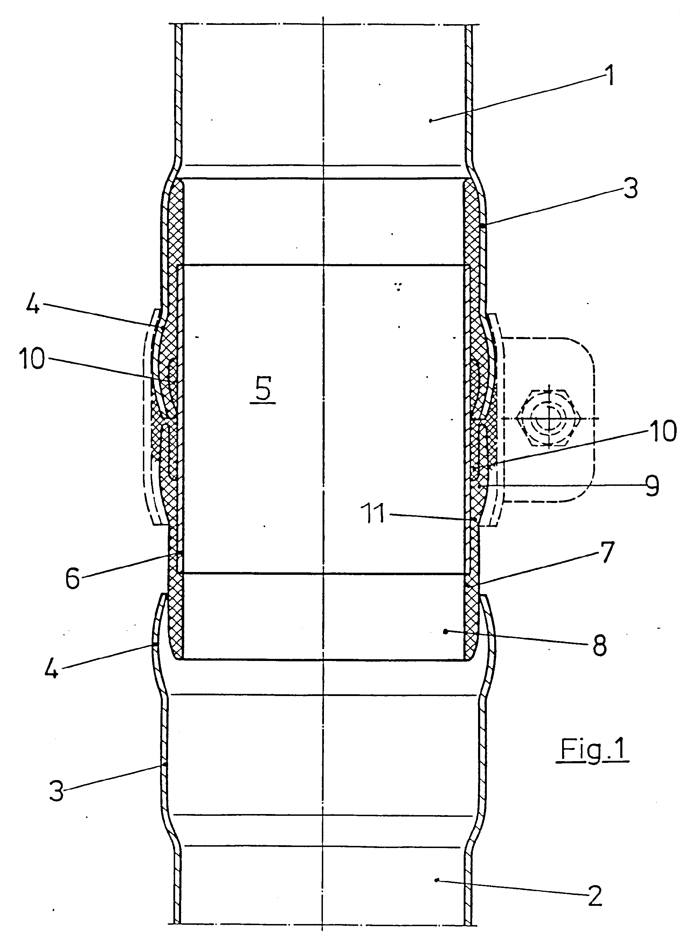

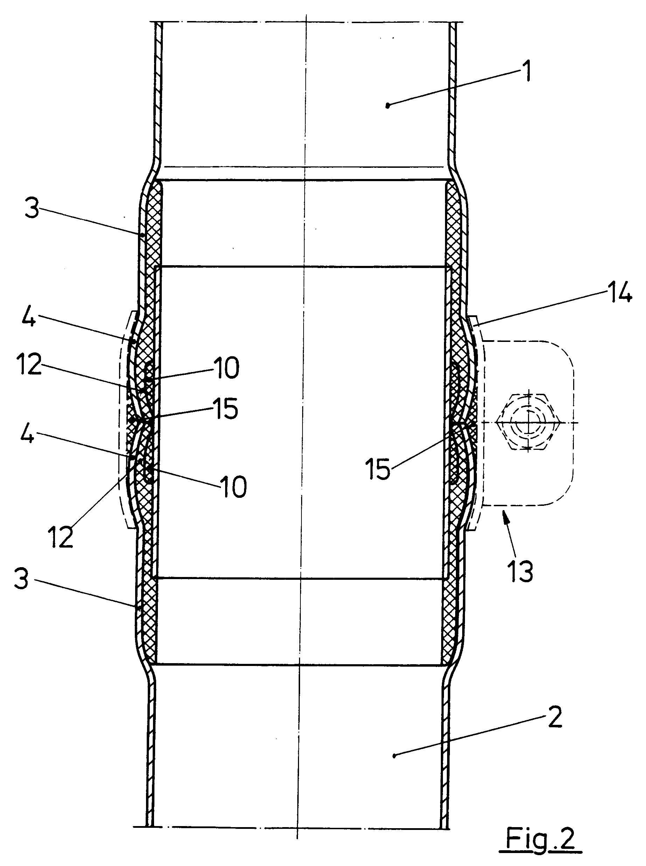

In die Aufnahmetaschen 10 des Kupplungsstücks 5 wird vor der Montage der erfindungsgemäßen Rohrverbindung beispielsweise ein aushärtungsfähiger Kunststoff eingebracht, so daß beim Einschieben des Kupplungsstücks 5 in die muffenartige Aufweitung des einen Rohrendes sich eine gewisse Durchmesserverringerung des jeweiligen Dichtelements 7 ergibt, welche ihrerseits eine Verdrängungswirkung auf den, in der jeweiligen ringartigen Aufnahmetasche 10 befindlichen flüssigen Kunststoff zur Folge hat, welcher auf diese Weise aus der Aufnahmetasche 10 heraus und auf die Außenseite des tulpenartigen Abschnittes 4 verdrängt wird. Fig. 1 zeigt einen Montagezustand, bei dem das Kupplungsstück 5 in das Rohrende 1 vollständig eingeschoben ist, wobei das Rohrende 2 noch über das Kupplungsstück 5 zu schieben ist. Als Folge des Überschiebens des Rohrendes 2 ergibt sich auch in der Aufnahmetasche 10 des diesem zugeordneten Dichtelements 7 eine Verdrängungswirkung auf den innerhalb dieser befindlichen Kunststoff, so daß in dem in Fig. 2 gezeigten montierten Zustand, in dem die stirnseitigen Enden der tulpenartigen Abschnitte 4 nahezu aneinanderliegen der durch die Aufnahmetaschen 10 definierte Ringraum sowie ein eventuell zwischen den stirnseitigen Enden der Abschnitte 4 verbleibender Zwischenraum vollständig mit dem genannten härtungsfähigen Kunststoff ausgefüllt ist.

In diesem montierten Zustand wird eine sichere Anpressung der, die Aufnahmetaschen 10 außenseitig umgebenden Abschnitte 12 der Dichtelemente 7 gegen die Innenseite des tulpenartigen Abschnitts 4 erreicht und damit in diesem Bereich eine zuverlässige Dichtwirkung. Die tulpenartigen Abschnitte 4 bilden in Verbindung mit den gefüllten Aufnahmetaschen 10 sowie den Abschnitten 12 der Dichtelemente 7 auch eine zuverlässige formschlüssig wirkende Fixierung der Rohrenden 1, 2 aneinander.

Die Lösbarkeit der erfindungsgemäßen Rohrverbindung hängt im wesentlichen nur von der Beschaffenheit des in die Aufnahmetaschen 10 eingebrachten Kunststoffes ab. Handelt es sich bei diesem um einen duromeren Stoff, ist eine zerstörungsfreie Lösung dieser Rohrverbindung nicht möglich. Handelt es sich hierbei um einen elastomeren Stoff, kann unter Wärmeaufwendung die Rohrverbindung gelöst werden. Handelt es sich hierbei um einen leicht verformbaren Kunststoff, kann die Rohrverbindung im Grenzfall auch als reine Steckverbindung betrachtet werden, deren Lösbarkeit jederzeit gegeben ist.

Mit 13 ist eine an sich bekannte, schraubenbetätigte Rohrschelle bezeichnet, der ein, im montierten Zustand beide tulpenartigen Abschnitte 4 übergreifender, d.h. mit endseitig angeordneten, an das Profil der Abschnitte 4 angepaßten radialen Einziehungen versehener muffenartiger Spannkörper 14 zugeordnet ist, dessen Durchmesser in an sich bekannter Weise verringerbar ist. Durch diesen Spannkörper kann insbesondere bei größeren Dimensionen sowie größeren Drücken eine zusätzliche Sicherung gegenüber einem aus axialen Auseinanderziehen der Rohrverbindung realisiert werden.

Zwischen der Innenfläche des Spannkörpers 14 sowie den Außenflächen der Abschnitte 4 ergibt sich auf diese Weise ein Ringraum 15, der als Aufnahmeraum für den, aus den Aufnahmetaschen 10 verdrängten Kunststoff zur Verfügung steht. Eine Durchmesserverringerung des Spannkörpers 14 der Rohrschelle 13 bewirkt somit über diesen, in dem Ringraum 15 befindlichen Kunststoff eine gleichmäßige radiale Druckausübung auf die Außenseiten der diesen Ringraum innenseitig begrenzenden tulpenartigen Abschnitte 4.

Ein wesentlicher Vorteil der erfindungsgemäßen Rohrverbindung liegt darin, daß sich im Innenwandungsverlauf zwischen den Rohrenden 1, 2 praktisch keine Stoßstellen oder sonstige Aufnahmeräume befinden, welche Strömungsgeräusche verursachen könnten und darüber hinaus bei Benutzung der Rohrverbindung im Rahmen einer Trinkwasserleitung hygienische Risiken mit sich bringen könnten. Zur Vermeidung von durch unterschiedliche metallische Werkstoffpaarungen bedingte Korrosionsproblemen sind das Kernrohr 6, die Rohrenden 1, 2 sowie die Rohrschelle 13 aus identischen metallischen Werkstoffen ausgebildet.

## Patentansprüche

1. Rohrverbindung zwischen zwei Rohrenden (1,2), wobei beide Rohrenden (1,2) eine muffenartige, mit einem ausgewölbten Abschnitt (4) versehene Aufweitung aufweisen,
   - wobei ein zur Aufnahme in den Aufweitungen bestimmtes Kupplungsstück (5) vorgesehen ist, welches aus einem innenseitig angeordneten Kernrohr (6) und außenseitigen ringartigen Dichtelementen (7) besteht,
   - wobei die Dichtelemente (7) mit außenseitigen, zur Aufnahme in den Abschnitten (4) bestimmten Auswölbungen versehen sind,
   - wobei das Kupplungsstück (5) über die Abschnitte (4) formschlüssig mit beiden Rohrenden (1,2) in dichtender Verbindung steht,
   - wobei beide Abschnitte (4) axial formschlüssig durch eine schraubenbetätigte, einen muffenartigen Spannkörper (14) aufweisende Rohrschelle (13) umfaßt sind, welcher Spannkörper (14) an seinen stirnseitigen Endbereichen gestaltlich an die Abschnitte (4) angepaßt ist,
   dadurch gekennzeichnet
   - daß die Auswölbungen der Dichtelemente (9) mit Aufnahmetaschen (10) versehen sind und
   - daß in den Aufnahmetaschen (10) ein zur Verbindung oder Verklebung mit dem Werkstoff der Dichtelemente (7) geeigneter Kunststoff aufgenommen ist.

2. Rohrverbindung nach Anspruch 1, dadurch gekennzeichnet, daß der zwischen den Außenflächen der ausgewölbten Abschnitte (4) einerseits und dem mittleren Bereich des Spannkörpers (14) andererseits bestehende Ringraum (15) mit einem Kunststoff ausgefüllt ist, der demjenigen der Aufnahmetaschen (10) entspricht.

3. Rohrverbindung nach Anspruch 1, dadurch gekennzeichnet, daß der Spannkörper (14) in seinem mittleren Bereich einen innenseitig herausragenden, gestaltlich an den Verlauf der Außenflächen der ausgewölbten Abschnitte (4) angepaßten, aus einem beispielsweise gummielastischen Kunststoff bestehenden Vorsprung aufweist, der mit der Innenseite des Spannkörpers verklebt ist.

4. Rohrverbindung nach einem der Ansprüche 1 bis 3, dadurch gekennzeichnet, daß der Spannkörper (14) beide ausgewölbte Abschnitte (4) symmetrisch überdeckt.

5. Rohrverbindung nach einem der vorangegangenen Ansprüche 1 bis 4, dadurch gekennzeichnet, daß das Kernrohr (6) stirnseitig axial von den Dichtelementen (7) überragt wird, daß die Innenwandungen der das Kernrohr (6) überragenden Abschnitte der Dichtelemente (7) und des Kernrohres (6) unter Vermeidung von Stoßstellen fluchtend zu den Innenwandungen der Rohrenden (1,2) außerhalb deren muffenartiger Aufweitungen verlaufen und daß jeweils ein Dichtelement vollständig in einer muffenartigen Aufweitung aufgenommen ist.

6. Rohrverbindung nach einem der Ansprüche 1 bis 5, dadurch gekennzeichnet, daß der in den Aufnahmetaschen (10) befindliche Kunststoff ein duroplastischer Kunststoff ist.

7. Rohrverbindung nach einem der Ansprüche 1 bis 5, dadurch gekennzeichnet, daß der in den Aufnahmetaschen (10) befindliche Kunststoff ein thermoplastischer Kunststoff ist.

8. Rohrverbindung nach einem der vorangegangenen Ansprüche 1 bis 7, dadurch gekennzeichnet, daß die Rohrenden (1,2) und das Kernrohr (6) aus einem identischen Werkstoff, z.B. Stahl, Aluminium oder Kupfer bestehen.

9. Rohrverbindung nach einem der vorangegangenen Ansprüche 1 bis 8, dadurch gekennzeichnet, daß die Dichtelemente (7) aus einem elastischen, beispielsweise einem gummielastischen Kunststoff bestehen, und mit dem Kernrohr (6) verklebt oder an dieses anvulkanisiert sind.

10. Rohrverbindung nach einem der vorangegangenen Ansprüche 1 bis 9, dadurch gekennzeichnet, daß die Dichtelemente (7) an den Endbereichen des Kernrohres (6) angeordnet sind, daß die Aufnahmetaschen (10) in Gegenrichtung zur Einschubrichtung des Kupplungsstücks (5) offen sind und daß die Auswölbungen der Dichtelemente (7) gestaltlich den Abschnitten (4) der Aufweitungen der Rohrenden (1,2) nachgebildet sind.

**Claims**

1. Tube connection between two tube ends (1,2) wherein the two tube ends (1,2) have a sleeve-type expanded section which is provided with an arched section (4),
    -and a coupling piece (5), which is intended for reception in the expanded sections and which comprises an inner tube (6) disposed on the inside and annular sealing elements on the outside, is provided,
    -and the sealing elements (7) are provided with arched sections on the outside intended for reception in the sections (4).
    -and the coupling piece (5) is form-lockingly connected to the two tube ends (1,2) by way of sections (4),
    -and the two sections (4) are axially form-lockingly enveloped by means of a screw-operated tube clamp (13), which has a sleeve-type tensioning device (14), and the tensioning device (14) is adjusted at its front end regions to suit the sections (4),
    characterised in that:
    -the arched sections of the sealing elements (9) are fitted with receiving pockets (10) and
    -a synthetic material suitable for connecting or sticking to the material of the sealing elements (7) is accommodated in the receiving pockets (10).

2. Tube connection according to claim 1, characterised in that the annular space (15), between the external surface of the arched sections (4) on the one side and the central region of the tensioning device (14) on the other side, is filled with a synthetic material, which corresponds to that of the receiving pockets (10).

3. Tube connection according to claim 1, characterised in that the tensioning device (14) has in its central region a projection which protrudes on the inside, is adjusted to match the shape of the contour of the external surface of the arched sections (4) and consists of a rubber elastic synthetic material, the projection being adhered to the inside of the tensioning device (14).

4. Tube connection according to one of claims 1 to 3, characterised in that the tensioning device (14) covers the two arched sections (4) symmetrically.

5. Tube connection according to one of the aforementioned claims 1 to 4, characterised in that the inner tube (6) at the front end axially protrudes from the sealing elements (7), and the internal walls of the sections, extending beyond the inner tube (6), of the sealing elements (7) and of the inner tube (6), are aligned to the internal walls of the tube ends (1,2) outside the sleeve-type expanded section of the tube ends (1,2) avoiding joint abutments, and furthermore, in each case, a sealing element is completely accommodated in a sleeve-type expanded section.

6. Tube connection according to one of claims 1 to 5, characterised in that the synthetic material in the receiving pockets (10) is a duroplastic synthetic material.

7. Tube connection according to one of claims 1 to 5, characterised in that the synthetic material in the receiving pockets (10) is a thermoplastic synthetic material.

8. Tube connection according to one of the aforementioned claims 1 to 7, characterised in that the tube ends (1,2) and the inner tube (6) consist of an identical material, such as for example steel, aluminium or copper.

9. Tube connection according to one of the aforementioned claims 1 to 8, characterised in that the sealing elements (7) consist of an elastic, for example a rubber elastic, synthetic material and are adhered to or are vulcanised on to the inner tube (6).

10. Tube connection according to the aforementioned claims 1 to 9, characterised in that the sealing elements (7) are disposed on the end regions of the inner tube (6), and the receiving pockets (10) are open in the opposite direction to the direction of insertion of the coupling piece (5) and the arched sections of the sealing elements (7) are formed to the shape of the sections (4) of the expanded sections of the tube ends (1,2).

## Revendications

1. Raccord entre deux extrémités de tubes (1, 2), dans lequel ces deux extrémités présentant un évasement en forme de manchon comportant une partie bombée (4),

   un élément d'accouplement (5), qui se compose d'un tube central (6) disposé du côté intérieur et d'éléments d'étanchéité (7) annulaires disposés du côté extérieur, étant prévu pour être reçu dans les évasements,

   les éléments d'étanchéité (7) présentant, sur leur côté extérieur, des bombements prévus pour être reçus dans les parties (4),

   l'élément d'accouplement (5) étant raccordé de façon étanche en engagement positif avec les deux extrémités de tubes (1, 2) au moyen des parties (4),

   les deux parties (4) étant entourées en engagement positif axial par une coquille tubulaire (13) actionnée par vissage, comportant un corps de serrage (14) en forme de manchon, corps de serrage (14) qui est adapté géométriquement aux parties (4) à ses zones d'extrémités frontales,

   caractérisé en ce que

   -les bombements des éléments d'étanchéité (7) présentent des poches réceptrices (10) et

   -qu'une matière plastique appropriée à une liaison ou à un collage avec la matière des éléments d'étanchéité (7) est reçue dans les poches réceptrices (10).

2. Raccord de tubes selon la revendication 1, caractérisé en ce que l'espace annulaire (15), ménagé entre les surfaces extérieures des parties bombées (4) d'une part et la zone médiane du corps de serrage (14) d'autre part, est rempli d'une matière plastique qui correspond à celle des poches réceptrices (10).

3. Raccord de tubes selon la revendication 1, caractérisé en ce que le corps de serrage (14) comprend, dans sa zone médiane, une saillie, collée avec le côté intérieur du corps de serrage, avançant vers l'intérieur, adaptée géométriquement au tracé des surfaces extérieures des parties bombées (4), formée en une matière plastique, par exemple d'une élasticité de type caoutchouc.

4. Raccord de tubes selon l'une des revendications 1 à 3, caractérisé en ce que le corps de serrage (14) recouvre de façon symétrique les deux parties bombées (4).

5. Raccord de tubes selon l'une des revendications précédentes 1 à 4, caractérisé en ce que les éléments d'étanchéité (6) se prolongent axialement en surplomb au-delà de la face frontale du tube central (6), que les parois intérieures des parties des éléments d'étanchéité (7) en surplomb au-delà du tube central (6) et celles de ce dernier sont d'un tracé qui est en prolongement des parois intérieures des extrémités de tubes (1, 2) en dehors de leurs évasements en forme de manchon en évitant les discontinuités, et en ce qu'un élément d'étanchéité est complètement reçu dans chacun des évasements en forme de manchon.

6. Raccord de tubes selon l'une des revendications 1 à 5, caractérisé en ce que la matière plastique qui se trouve dans les poches réceptrices (10) est une matière plastique thermodurcissable.

7. Raccord de tubes selon l'une des revendications 1 à 5, caractérisé en ce que la matière plastique qui se trouve dans les poches réceptrices (10) est une matière thermoplasique.

8. Raccord de tubes selon l'une des revendications précédentes 1 à 7, caractérisé en ce que les extrémités de tubes (1, 2) et le tube central (6) sont en une matière identique, par exemple de l'acier, de l'aluminium ou du cuivre.

9. Raccord de tubes selon l'une des revendications précédentes 1 à 8, caractérisé en ce que les éléments d'étanchéité (7) sont formés d'une matière plastique élastique, d'une élasticité de type caoutchouc par exemple, et sont collés avec le tube central (10) ou sont vulcanisés sur celui-ci.

10. Raccord de tubes selon l'une des revendications précédentes 1 à 9, caractérisé en ce que les éléments d'étanchéité (7) sont disposés sur les zones d'extrémité du tube central (6), que les poches réceptrices (10) sont ouvertes dans le sens opposé au sens d'insertion de l'élément d'accouplement (5) et que les bombements des éléments d'étanchéité (7) sont adaptés géométriquement aux parties (4) des évasements des extrémités de tubes (1, 2).

Fig.1

Fig.2